# EUROPÄISCHE PATENTSCHRIFT

(11) **EP 3 507 028 B1**
(45) Veröffentlichungstag und Bekanntmachung des Hinweises auf die Patenterteilung: **20.04.2022**
(21) Anmeldenummer: 17768987.4
(22) Anmeldetag: 29.08.2017
(51) Int. Cl.: B06B 1/06, B23K 20/10, B29C 65/08, B26D 7/08, B06B 3/00

(54) **ULTRASCHALLSCHWINGSYSTEM MIT MANTELFLÄCHEN-AMPLITUDENTRANSFORMATOR**
ULTRASONIC VIBRATION SYSTEM HAVING AN AMPLITUDE TRANSFORMER MOUNTED ON THE LATERAL SURFACE
SYSTÈME GÉNÉRATEUR D'ULTRASONS COMPORTANT UN TRANSFORMATEUR D'AMPLITUDE RACCORDÉ PAR LA SURFACE EXTÉRIEURE

(30) Priorität: 02.09.2016 DE 102016116430
(43) Veröffentlichungstag der Anmeldung: 10.07.2019
(73) Patentinhaber: Herrmann Ultraschalltechnik GmbH & Co. KG, 76307 Karlsbad (DE)
(72) Erfinder: VOGLER, Ulrich, 88690 Uhldingen-Mühlhofen (DE)
(74) Vertreter: WSL Patentanwälte Partnerschaft mbB
(86) Internationale Anmeldenummer: PCT/EP2017/071620
(87) Internationale Veröffentlichungsnummer: WO 2018/041811

(56) Entgegenhaltungen:
- EP-A1- 2 743 060
- DE-A1-102009 026 952
- US-A- 3 939 033
- US-A1- 2013 213 580
- US-B1- 6 605 178

## Beschreibung

Die vorliegende Erfindung betrifft ein Ultraschallschwingsystem mit einer Sonotrode, welche zwei Sonotrodenstirnflächen und eine die beiden Sonotrodenstirnflächen miteinander verbindende, umlaufende Mantelfläche aufweist, wobei die Sonotrode ein längliches Kernelement und zumindest ein Flügelelement aufweist, wobei sich Kernelement und Flügelelement jeweils von der einen Sonotrodenstirnfläche zur anderen Sonotrodenstirnfläche erstrecken, wobei das Flügelelement eine Siegelfläche aufweist, die dafür vorgesehen ist, mit einem Material zu dessen Bearbeitung in Kontakt zu treten, und über eine Mehrzahl von in Längsrichtung des Kernelementes voneinander beabstandeten Stegen mit dem Kernelement verbunden ist.

Ein solches Ultraschallschwingsystem ist bekannt aus der EP 2 353 737 B1.

Besonderheit dieser Art von Sonotrode ist, dass die längliche Siegelfläche eine Schwingung in einer Ebene (In-Plane-Schwingung) durchführt, was für bestimmte Anwendungsfälle von Vorteil ist.

Die meisten anderen bekannten Sonotroden sind derart konstruiert, dass sie mit einer Longitudinalschwingung angeregt werden können, so dass sich in Richtung deren Längsachse eine stehende Welle ausbildet. Die Siegelfläche befindet sich dann in einem Schwingungsmaximum und führt in Richtung des zu bearbeitenden Materials eine Longitudinalschwingung durch. Im Grunde genommen bewegt sich die Sonotrode mit einer Ultraschallfrequenz in Richtung des zu bearbeitenden Materials und wieder zurück und "hämmert" somit auf das Material.

Im Gegensatz dazu wird bei der eingangs genannten Sonotrode der Siegelfläche eine In-Plane-Schwingung aufgeprägt, so dass die Siegelfläche auf dem zu bearbeitenden Material hin- und her bewegt wird und eine Reibschweißung erfolgt.

Die der EP 2 353 737 B1 zu Grunde liegende Idee ist es, die Sonotrode mit einer Art Biegeschwingung anzuregen, so dass sich Kernelement und Flügelelement zueinander gegenläufig bewegen.

Dabei wird das Kernelement angeregt und aufgrund der Verbindung der Flügelelemente über die Mehrzahl von Stegen führt dies zu einer gegenläufigen Bewegung der am Flügelelement angebrachten Siegelfläche.

In der EP 2 353 737 B1 wird das Kernelement durch einen symmetrisch zur Längsmittelachse des Kernelementes angeordneten Konverter angeregt.

Wie in den Figuren der EP 2 353 737 zu sehen ist, zeigen insbesondere die Randbereiche der Siegelfläche jedoch zusätzliche Schwingungsanteile, die senkrecht zur Siegelfläche verlaufen.

Darüber hinaus werden häufig anwenderspezifische Bauraumanforderungen gestellt, die mit dem in der EP 2 353 737 B1 gezeigten Anregungselement nicht erfüllt werden können, da die ohnehin bereits sehr lange Sonotrode in Längsrichtung durch den Konverter noch vergrößert wird.

Die Veröffentlichungen US 3,939,033 A, EP 2 743 060 A1, US 6,605,178 B1, US 2013/213580 A1 sowie DE 10 2009 026 952 A1 zeigen Ultraschallschwingsysteme, die keine In-Plane-Schwingung durchführen, sondern mit einer Longitudinalschwingung angeregt werden.

Aufgabe der vorliegenden Erfindung ist es daher, die vorgenannten Nachteile zu vermeiden oder zumindest abzuschwächen.

Erfindungsgemäß wird diese Aufgabe durch ein Ultraschallschwingsystem gemäß Anspruch 1 gelöst.

Dadurch, dass Amplitudentransformator oder Konverter nicht mehr an der Stirnfläche der Sonotrode angreifen, sondern an der Mantelfläche, kann die Gesamtlänge des Ultraschallschwingsystems reduziert werden.

In einer bevorzugten Ausführungsform ist vorgesehen, dass die Siegelfläche auf der Mantelfläche der Sonotrode liegt.

In einer bevorzugten Ausführungsform der Erfindung ist vorgesehen, dass der Konverter oder der Amplitudentransformator mit dem Flügelelement oder dem Kernelement verbunden ist. Wie bereits eingangs beschrieben, wird die Sonotrode derart angeregt, dass das Kernelement und das Flügelelement gegenläufige Schwingungen ausführen. Die Schwingungen sind daher am Kernelement und am Flügelelement am größten, während die Schwingungsamplitude an denen die beiden Elemente verbindenden Stegen geringer ist. Dadurch, dass Amplitudentransformator oder Konverter am Kernelement oder am Flügelelement angreifen, ist sichergestellt, dass der Energieverlust beim Übertragen der Schwingung vom Konverter bzw. Amplitudentransformator auf die Sonotrode minimiert wird.

In einer weiteren bevorzugten Ausführungsform ist vorgesehen, dass der Konverter oder Amplitudentransformator in einem Bereich mit der Sonotrode verbunden ist, der näher an der einen Sonotrodenstirnfläche als an der anderen Sonotrodenstirnfläche angeordnet ist.

Diese asymmetrische Anordnung hat den Vorteil, dass Amplitudentransformator und Konverter neben der Sonotrode angeordnet werden können, ohne dass die Gesamtlänge der Sonotrode vergrößert wird.

In einer weiteren bevorzugten Ausführungsform ist vorgesehen, dass der Konverter über einen Amplitudentransformator mit der Sonotrode verbunden ist, wobei der Amplitudentransformator ein Amplitudentransformatorkernelement und mindestens ein Amplitudentransformatorflügelelement aufweist, wobei Amplitudentransformatorflügelelement und Amplitudentransformatorkernelement über zumindest zwei Stege miteinander verbunden sind. Besonders bevorzugt ist das Amplitudentransformatorflügelelement an der Sonotrode befestigt, so dass sich eine Schwingung des Amplitudentransformatorflügelelement auf die Sonotrode überträgt.

Im Grunde genommen besteht der Amplitudentransformator selbst aus einer Sonotrode bestehend aus einem Kernelement und einem Flügelelement, die über Stege miteinander verbunden sind.

In einer weiteren bevorzugten Ausführungsform liegen die beiden Flügelelemente und das Kernelement in einer Ebene.

Diese Ausführungsform ist symmetrisch, was zu einer gleichmäßigen Anregungsschwingung an dem Flügelelement führt. Zudem eröffnet diese Ausführungsform die Möglichkeit, dass an dem Flügelelement, das nicht für die Bearbeitung eines Materials vorgesehen ist, entweder der Amplitudentransformator angreift oder eine Halterung angeordnet ist.

In einer weiteren bevorzugten Ausführungsform ist vorgesehen, dass zumindest eine Sonotrodenstirnfläche eine Fase aufweist, wobei die Fase an der Kante zwischen Sonotrodenstirnfläche und Siegelfläche angeordnet ist.

Diese Fase führt zu einer Verkürzung der Siegelfläche mit der Folge, dass oben beschriebene Verformung der Siegelfläche an der Kante während der Schwingung reduziert wird.

In einer weiteren bevorzugten Ausführungsform ist vorgesehen, dass die Stege durch in die Mantelfläche eingebrachte Durchgangsöffnung gebildet werden, so dass die Stege zwischen zwei benachbarten Durchgangsöffnungen angeordnet sind, wobei vorzugsweise die Durchgangsöffnungen länglich sind und sich deren Längsrichtung vom Kernelement zu dem Flügelelement erstreckt.

In einer besonders bevorzugten Ausführungsform haben die Durchgangsöffnungen eine Breite, die in Richtung des Flügelelementes zunimmt.

Sowohl Kernelement als auch Flügelelement haben eine Länge, eine Breite und eine Dicke. Dabei wird die Länge in Längsrichtung, d.h. von der einen Stirnfläche zu der anderen Stirnfläche, gemessen. Die Breite verläuft in der von Kernelement und Flügelelement gebildeten Ebene und die Dicke verläuft senkrecht zu Länge und Breite.

In einer bevorzugten Ausführungsform ist vorgesehen, dass das Flügelelement eine Dicke aufweist, die geringer als die Dicke des Kernelementes ist, wobei vorzugsweise die Dicke des Flügelelementes kleiner als 75% und besonders bevorzugt 50 -60% der Dicke des Kernelementes beträgt.

Alternativ oder in Kombination ist in einer weiteren bevorzugten Ausführungsform vorgesehen, dass das Flügelelement eine Breite b_{F} aufweist, die geringer als die Breite b_{K} des Kernelementes ist, wobei vorzugsweise die Breite des Flügelelementes kleiner als 50% und besonders bevorzugt kleiner als 35% der Breite des Kernelementes beträgt.

Es hat sich gezeigt, dass dadurch die Bewegung der Siegelfläche des Flügelelementes verstärkt werden kann.

In einer weiteren bevorzugten Ausführungsform ist vorgesehen, dass das Flügelelement über mindestens sechs und höchstens neun Stege mit dem Kernelement verbunden ist. Durch eine Vielzahl von Versuchen konnte nachgewiesen werden, dass bei Ausführungsformen mit weniger als sechs Stegen der Anteil der Schwingungen des Flügelelementes senkrecht zur Siegelfläche signifikant größer werden. Bei Ausführungsform mit mehr als neuen Stegen steigt die Anzahl von Schwingungsmoden so stark an, dass es schwierig ist, nur die gewünschte Biegeschwingung anzuregen.

Weitere Vorteile, Merkmale und Anwendungsmöglichkeiten der vorliegenden Erfindung werden deutlich anhand der folgenden Beschreibung zweier Ausführungsformen und der zugehörigen Figuren. Es zeigen:
- Figur 1: Eine Draufsicht auf eine erste Ausführungsform einer erfindungsgemäßen Ultraschallschwingeinheit,
- Figur 2: eine perspektivische Ansicht auf die Ausführungsform von Figur 2,
- Figur 3: eine seitliche Ansicht der Ausführungsform von Figur 1,
- Figur 4: eine Draufsicht auf eine zweite Ausführungsform der Erfindung und
- Figur 5: eine perspektivische Ansicht der Ausführungsform von Figur 4.

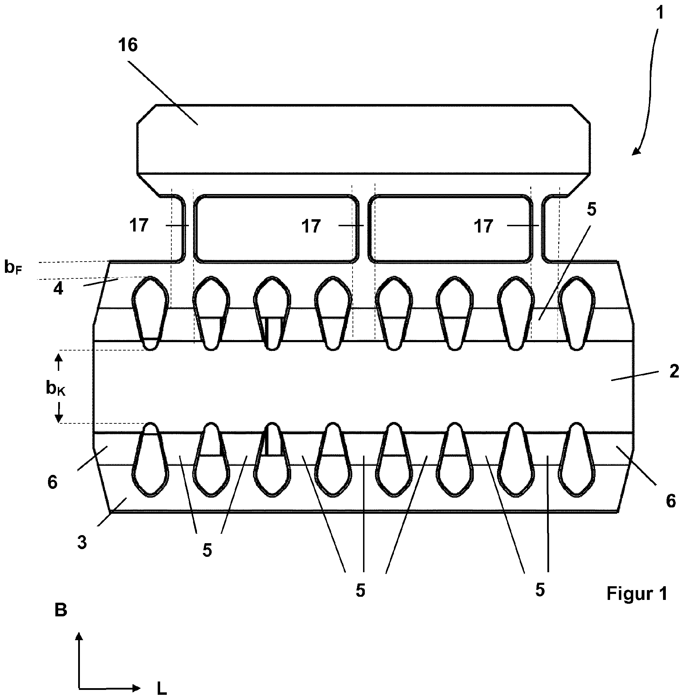

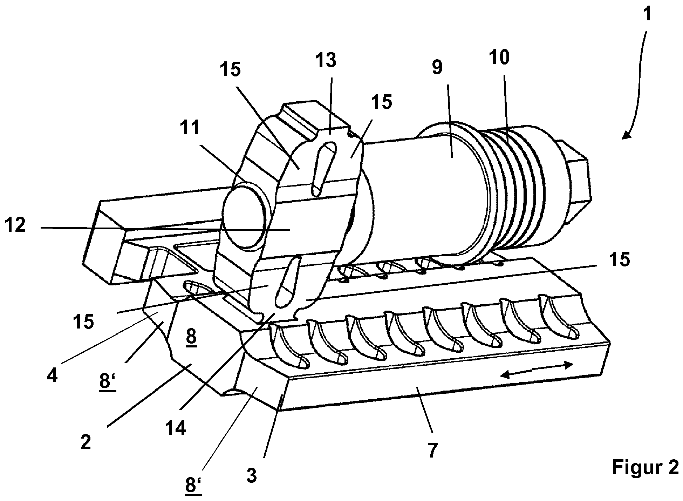

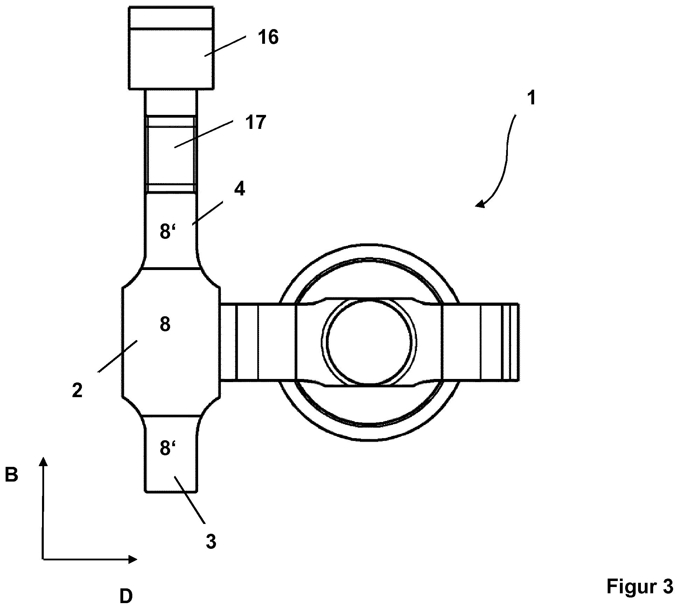

In Figur 1 ist eine erste Ausführungsform eines Ultraschallschwingsystems 1 dargestellt. In Figur 2 ist eine perspektivische Ansicht dieser Ausführungsform gezeigt, während in Figur 3 eine seitliche Ansicht dargestellt ist.

Das Ultraschallschwingsystem 1 besteht aus einer Sonotrode, welche wiederum ein Kernelement 2 und zwei Flügelelemente 3, 4 aufweist. Die Flügelelemente 3, 4 sind über entsprechende Stege 5, 6 mit dem Kernelement 2 verbunden. Sowohl Kernelement 2 als auch Flügelelemente 3,4 erstrecken sich in Längsrichtung L.

Man erkennt in Figur 2, dass das Kernelement 2 eine größere Dicke (in der Richtung D) aufweist als die beiden Flügelelemente 3, 4. Ebenso weist das Kernelement 2 eine Breite b_{K} (in der Richtung B) auf, die größer als die Breite b_{F} der Flügelelemente ist. Das Kernelement 2 ist länglich ausgeführt und weist zusammen mit den Flügelelementen 3, 4 bzw. den Verbindungsstegen 5, 6 zwei Stirnflächen auf, die über eine umlaufende Mantelfläche miteinander verbunden sind. Die Mantelfläche ist in Figur 1 gut zu sehen, während in Figur 3 ein Blick auf eine der beiden Stirnflächen 8,8' dargestellt ist. Die Stirnfläche 8,8' der Sonotrode weist zwei Fasenflächen 8' auf.

Ein Flügelelement 3 weist eine Siegelfläche 7 auf, die dafür vorgesehen ist, mit dem zu bearbeitenden Material in Kontakt zu treten. Diese Siegelfläche soll im Betrieb eine möglichst homogene In-Plane-Schwingung durchführen, deren Richtung in Figur 2 schematisch mittels eines Doppelpfeils dargestellt ist.

Um eine solche In-Plane-Schwingung der Siegelfläche 7 zu ermöglichen, muss die Ultraschallschwingeinheit 1 angeregt werden. Bei der gezeigten Ausführungsform wird das Kernelement 2 in eine Ultraschallschwingung gebracht, die mittels der Stege 5, 6 auf die Flügelelemente und insbesondere auf die Siegelfläche 7 übertragen wird. Zur Anregung wird ein Konverter 9 mit entsprechenden Piezoelementen 10 verwendet, welche eine elektrische Wechselspannung in eine longitudinale mechanische Ultraschallschwingung umwandeln. Diese wird auf den Amplitudentransformator 11 übertragen, der hier einen ähnlichen Aufbau hat wie die Sonotrode, nämlich aus einem Amplitudentransformatorkernelement 12, Amplitudentransformatorflügelelementen 13, 14 und Verbindungsstegen 15, welche das Amplitudentransformatorkernelement 12 mit den Amplitudentransformatorflügelelementen 13, 14 verbindet, besteht.

Aufgrund der Ankopplung des Konverters 9 am Amplitudentransformator 11 wird das Amplitudentransformatorkernelement 12 in eine In-Plane-Schwingung gebracht, welche über die Verbindungsstege 15 auf die Amplitudentransformatorflügelelemente 13, 14 übertragen wird. Da das Amplitudentransformatorflügelelement 14 mit dem Kernelement 2 der Sonotrode verbunden ist, überträgt sich die Schwingung auf die Sonotrode und damit auf die Siegelfläche 7. Im Ergebnis erhält man eine sehr kompakte Ausführungsform einer Ultraschallschwingeinheit 1.

Um die Schwingungsamplitude möglichst wenig zu beeinflussen, ist an dem der Siegelfläche 7 abgewandten Seite der Sonotrode, d.h. an dem Flügelelement 4 eine Halterung vorgesehen, die aus einem Befestigungsbalken 16, der fest mit einem Maschinenständer verbunden werden kann, und entsprechenden flexiblen Elementen 17 gebildet wird. In dem Befestigungsbalken 16 können Bohrungen zum Befestigen des Befestigungsbalkens 16 an dem Maschinenständer angeordnet sein. Dabei bilden Flügelelement 4, flexible Elemente 17 und Befestigungsbalken 16 Starrkörpergelenke. Die flexiblen Elemente 17 haben in der Richtung B eine Länge von etwa 14 mm. Die flexiblen Elemente 17 werden durch blattförmige Elemente gebildet, die in Längsrichtung L eine deutlich geringere Abmessung haben als in den beiden dazu senkrechten Richtungen B und D. Dies hat zur Folge, dass die flexiblen Elemente in Längsrichtung L eine viel größere Flexibilität aufweisen als in den dazu senkrechten Richtungen. Durch diese Maßnahme ist eine zuverlässige Halterung der Sonotrode auch bei Ausübung einer Schweißkraft auf die Siegelfläche möglich, während gleichzeitig die In-Plane-Schwingung des Flügelelementes 4 aufgrund der flexiblen Elemente nur geringfügig beeinflusst wird.

In Figur 1 ist zu erkennen, dass alle flexiblen Elemente 17 zumindest zum Teil im Bereich einer Projektion der Stege auf das Flügelelement 4 an dem Flügelelement angreifen. Die Projektionen sind in Figur 1 als gestrichelte Linie eingezeichnet.

In dem dargestellten Beispiel ist das Flügelelement 3 über insgesamt neun Stege 5, 6 mit dem Kernelement 2 verbunden. Man erkennt, dass die Stirnflächen beidseits in Richtung der Flügelelemente jeweils eine Fasenfläche aufweisen, wodurch die Breite der äußeren Stege 6 verringert wird. Durch diese Maßnahme kann das Schwingungsverhalten der Sonotrode verbessert werden.

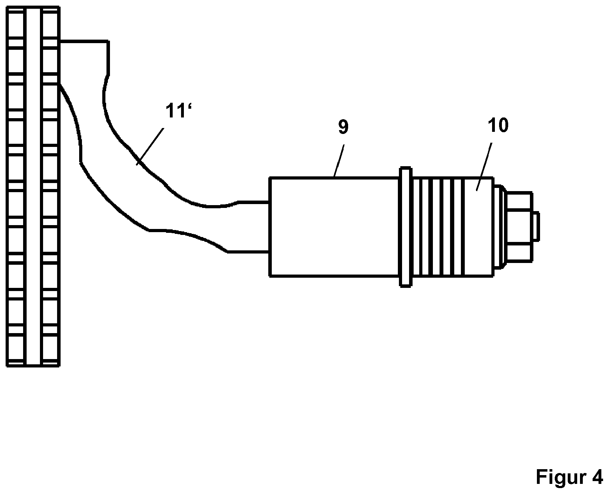

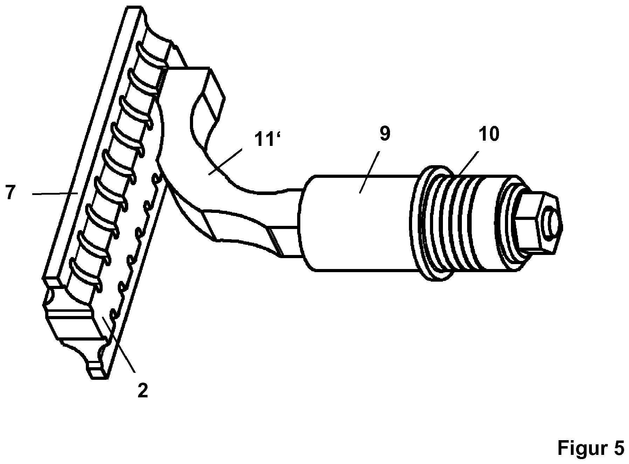

In den Figuren 4 und 5 ist eine zweite Ausführungsform der Erfindung gezeigt. Hierbei ist die Sonotrode in gleicher Weise ausgeführt wie in der in den Figuren 1 bis 3 gezeigten Ausführungsform. Einziger Unterschied ist hier, dass ein anderer Amplitudentransformator verwendet wird. Dieser besteht im Wesentlichen aus einem gekrümmten Element 11', welches die vom Konverter 9 mittels der Piezoscheiben 10 erzeugten longitudinalen Ultraschallschwingung in eine In-Plane-Schwingung umsetzt. Der gekrümmte Amplitudentransformator 11' steht dann wieder mit dem Kernelement 2 der Sonotrode in Verbindung.

Die Halterung kann wie in der in den Figuren 1 bis 3 gezeigten Ausführungsform erfolgen. Die Halterung ist in den Figuren 4 und 5 jedoch nicht abgebildet.

### Bezugszeichen

- 1: Ultraschallschwingsystem/Ultraschallschwingeinheit
- 2: Kernelement
- 3: Flügelelement
- 4: Flügelelement
- 5: Steg
- 6: Steg
- 7: Siegelfläche
- 8, 8': Stirnfläche
- 9: Konverter
- 10: Piezoelement
- 11: Amplitudentransformator
- 11': gekrümmtes Element
- 12: Amplitudentransformatorkernelement
- 13: Amplitudentransformatorflügelelement
- 14: Amplitudentransformatorflügelelement
- 15: Verbindungsstege
- 16: Befestigungsbalken
- 17: flexible Elemente

## Patentansprüche

1. Ultraschallschwingsystem (1) mit einer Sonotrode, welche zwei Sonotrodenstirnflächen (8, 8') und eine die beiden Sonotrodenstirnflächen (8, 8') miteinander verbindende, umlaufende Mantelfläche aufweist, wobei die Sonotrode ein längliches Kernelement (2) und zumindest ein Flügelelement (3, 4) aufweist, wobei sich Kernelement (2) und Flügelelement (3, 4) jeweils von der einen Sonotrodenstirnfläche (8, 8') zur anderen Sonotrodenstirnfläche (8, 8') in einer Längsrichtung erstrecken, wobei das Flügelelement (3, 4) eine Siegelfläche (7) aufweist, die dafür vorgesehen ist, mit einem Material zu dessen Bearbeitung in Kontakt zu treten, und über eine Mehrzahl von in Längsrichtung voneinander beabstandeten Stegen (5, 6) mit dem Kernelement (2) verbunden ist, und einem Konverter (9), der gegebenenfalls über einen Amplitudentransformator (11) mit der Sonotrode verbunden ist, **dadurch gekennzeichnet, dass** der Konverter (9) oder der Amplitudentransformator (11) mit der Mantelfläche der Sonotrode verbunden ist und die Sonotrode zwei Flügelelemente (3, 4) aufweist, die jeweils über eine Mehrzahl von in Längsrichtung des Kernelementes (2) voneinander beabstandeten Stegen (5, 6) mit dem Kernelement (2) verbunden sind, sodass in einem Betrieb des Ultraschallschwingsystems (1) der Sonotrode eine In-Plane-Schwingung aufgeprägt wird, sodass die Siegelfläche (7) auf dem zu bearbeitenden Material hin- und her bewegt wird und eine Reibschweißung erfolgt.

2. Ultraschallschwingsystem (1) nach Anspruch 1, **dadurch gekennzeichnet, dass** der Konverter (9) oder, falls der Konverter über einen Amplitudentransformator mit der Sonotrode verbunden ist, der Amplitudentransformator (11) mit dem Flügelelement (3, 4) oder dem Kernelement (2) verbunden ist.

3. Ultraschallschwingsystem (1) nach Anspruch 1 oder 2, **dadurch gekennzeichnet, dass** der Konverter (9) oder, falls der Konverter über einen Amplitudentransformator mit der Sonotrode verbunden ist, der Amplitudentransformator (11) in einem Bereich mit der Sonotrode verbunden ist, der näher an der einen Sonotrodenstirnfläche (8) als an der anderen Sonotrodenstirnfläche (8') angeordnet ist.

4. Ultraschallschwingsystem (1) nach einem der Ansprüche 1 bis 3, **dadurch gekennzeichnet, dass** der Konverter über einen Amplitudentransformator mit der Sonotrode verbunden ist, der Amplitudentransformator(11) ein Amplitudentransformatorkernelement (12) und mindestens ein Amplitudentransformatorflügelelement (13, 14) aufweist, wobei Amplitudentransformatorflügelelement (13, 14) und Amplitudentransformatorkernelement (12) über zumindest zwei Stege (15) miteinander verbunden sind, wobei vorzugsweise das Amplitudentransformatorkernelement (12) mit einem Konverter (9) verbunden ist.

5. Ultraschallschwingsystem (1) nach einem der Ansprüche 1 bis 4, **dadurch gekennzeichnet, dass** die beiden Flügelelemente (3, 4) und das Kernelement (2) in einer Ebene liegen.

6. Ultraschallschwingsystem (1) nach einem der Ansprüche 1 bis 5, **dadurch gekennzeichnet, dass** zumindest eine Sonotrodenstirnfläche (8, 8') ein Fase aufweist, wobei die Fase an der Kante zwischen Sonotrodenstirnfläche (8, 8') und Siegelfläche (7) angeordnet ist.

7. Ultraschallschwingsystem (1) nach einem der Ansprüche 1 bis 6, **dadurch gekennzeichnet, dass** die Stege (5, 6) zwischen in die Mantelfläche eingebrachte Durchgangsöffnungen gebildet werden, wobei vorzugsweise die Durchgangsöffnungen länglich sind und sich deren Längsrichtung vom Kernelement (2) zu dem Flügelelement (3, 4) erstreckt.

8. Ultraschallschwingsystem (1) nach Anspruch 7, **dadurch gekennzeichnet, dass** die Durchgangsöffnungen eine Breite haben, die in Richtung des Flügelelementes (3, 4) zunimmt.

9. Ultraschallschwingsystem (1) nach einem der Ansprüche 1 bis 8, **dadurch gekennzeichnet, dass** das Flügelelement (3, 4) über mindestens 6 und höchstens 9 Stege (5, 6) mit dem Kernelement (2) verbunden ist.

10. Ultraschallschwingsystem (1) nach einem der Ansprüche 1 bis 9, **dadurch gekennzeichnet, dass** das Flügelelement eine Dicke aufweist, die geringer als die Dicke des Kernelementes ist, wobei vorzugsweise die Dicke des Flügelelements kleiner als 75% der Dicke des Kernelementes beträgt.

11. Ultraschallschwingsystem (1) nach einem der Ansprüche 1 bis 10, **dadurch gekennzeichnet, dass** das Flügelelement eine Breite aufweist, die geringer als die Breite des Kernelementes ist, wobei vorzugsweise die Breite des Flügelelementes kleiner als 50% und besonders bevorzugt kleiner als 35% der Breite des Kernelementes beträgt.

12. Ultraschallschwingsystem nach einem der Ansprüche 1-11, **dadurch gekennzeichnet, dass** die Siegelfläche auf der Mantelfläche angeordnet ist.

## Claims

1. Ultrasonic vibration system (1) with a sonotrode which has two sonotrode end faces (8, 8') and a circumferential lateral surface that connects the two sonotrode end faces (8, 8') to each other, wherein the sonotrode has an elongate core element (2) and at least one wing element (3, 4), wherein core element (2) and wing element (3, 4) each extend from one sonotrode end face (8, 8') to the other sonotrode end face (8, 8') in a longitudinal direction, wherein the wing element (3, 4) has a sealing surface (7) which is provided to come into contact with a material for the processing thereof and is connected to the core element (2) via a plurality of connecting portions (5, 6) spaced apart from each other in the longitudinal direction, and a converter (9) which is optionally connected to the sonotrode via an amplitude transformer (11), **characterized in that** the converter (9) or the amplitude transformer (11) is connected to the lateral surface of the sonotrode and the sonotrode has two wing elements (3, 4) which are in each case connected to the core element (2) via a plurality of connecting portions (5, 6) spaced apart from each other in the longitudinal direction of the core element (2), with the result that during operation of the ultrasonic vibration system (1) an in-plane vibration is impressed on the sonotrode, with the result that the sealing surface (7) is moved back and forth on the material to be processed and a friction welding is effected.

2. Ultrasonic vibration system (1) according to claim 1, **characterized in that** the converter (9) or, if the converter is connected to the sonotrode via an amplitude transformer, the amplitude transformer (11) is connected to the wing element (3, 4) or the core element (2).

3. Ultrasonic vibration system (1) according to claim 1 or 2, **characterized in that** the converter (9) or, if the converter is connected to the sonotrode via an amplitude transformer, the amplitude transformer (11) is connected to the sonotrode in a region which is arranged closer to one sonotrode end face (8) than to the other sonotrode end face (8').

4. Ultrasonic vibration system (1) according to one of claims 1 to 3, **characterized in that** the converter is connected to the sonotrode via an amplitude transformer, the amplitude transformer (11) has an amplitude transformer core element (12) and at least one amplitude transformer wing element (13, 14), wherein amplitude transformer wing element (13, 14) and amplitude transformer core element (12) are connected to each other via at least two connecting portions (15), wherein the amplitude transformer core element (12) is preferably connected to a converter (9).

5. Ultrasonic vibration system (1) according to one of claims 1 to 4, **characterized In that** the two wing elements (3, 4) and the core element (2) lie in one plane.

6. Ultrasonic vibration system (1) according to one of claims 1 to 5, **characterized in that** at least one sonotrode end face (8, 8') has a chamfer, wherein the chamfer is arranged at the edge between sonotrode end face (8, 8') and sealing surface (7).

7. Ultrasonic vibration system (1) according to one of claims 1 to 6, **characterized in that** the connecting portions (5, 6) are formed between through-holes introduced in the lateral surface, wherein preferably the through-holes are elongate and the longitudinal direction thereof extends from the core element (2) to the wing element (3, 4).

8. Ultrasonic vibration system (1) according to claim 7, **characterized in that** the through-holes have a width which increases in the direction of the wing element (3, 4).

9. Ultrasonic vibration system (1) according to one of claims 1 to 8, **characterized in that** the wing element (3, 4) is connected to the core element (2) via at least 6 and at most 9 connecting portions (5, 6).

10. Ultrasonic vibration system (1) according to one of claims 1 to 9, **characterized In that** the wing element has a thickness which is smaller than the thickness of the core element, wherein the thickness of the wing element is preferably less than 75% of the thickness of the core element.

11. Ultrasonic vibration system (1) according to one of claims 1 to 10, **characterized in that** the wing element has a width which is smaller than the width of the core element, wherein the width of the wing element is preferably less than 50% and particularly preferably less than 35% of the width of the core element.

12. Ultrasonic vibration system according to one of claims 1-11, **characterized in that** the sealing surface is arranged on the lateral surface.

## Revendications

1. Système générateur d'ultrasons (1) comprenant une sonotrode comportant deux surfaces frontales de sonotrode (8, 8') et une surface d'enveloppe périphérique reliant les deux surfaces frontales de sonotrode (8, 8') l'une à l'autre, la sonotrode comprenant un élément formant noyau allongé (2) et au moins un élément formant ailette (3, 4), l'élément formant noyau (2) et l'élément formant ailette (3, 4) s'étendant respectivement à partir d'une surface frontale de sonotrode (8, 8') jusqu'à l'autre surface frontale de sonotrode (8, 8') dans une direction longitudinale, l'élément formant ailette (3, 4) comprenant une surface de scellement (7) conçue pour venir en contact avec un matériau en vue du traitement de celui-ci et reliée à l'élément formant noyau (2) par l'intermédiaire d'une pluralité d'éléments de jonction (5, 6) espacés les uns des autres dans la direction longitudinale, et un convertisseur (9) relié à la sonotrode éventuellement par l'intermédiaire d'un transformateur d'amplitude (11), **caractérisé en ce que** le convertisseur (9) ou le transformateur d'amplitude (11) est relié à la surface extérieure de la sonotrode et la sonotrode comprend deux éléments formant ailette (3, 4) reliés respectivement à l'élément formant noyau (2) par l'intermédiaire d'une pluralité d'éléments de jonction (5, 6) espacés les uns des autres dans la direction longitudinale de l'élément formant noyau (2), de sorte que, lors du fonctionnement du système générateur d'ultrasons (1), une oscillation dans le plan est communiquée à la sonotrode de sorte que la surface de scellement (7) soit déplacée en va-et-vient sur le matériau à traiter et qu'un soudage par friction se produise.

2. Système générateur d'ultrasons (1) selon la revendication 1, **caractérisé en ce que** le convertisseur (9) ou, si le convertisseur est relié à la sonotrode par l'intermédiaire d'un transformateur d'amplitude, le transformateur d'amplitude (11) est relié à l'élément formant ailette (3, 4) ou à l'élément formant noyau (2).

3. Système générateur d'ultrasons (1) selon la revendication 1 ou 2, **caractérisé en ce que** le convertisseur (9) ou, si le convertisseur est relié à la sonotrode par l'intermédiaire d'un transformateur d'amplitude, le transformateur d'amplitude (11) est relié à la sonotrode dans une région agencée plus près d'une surface frontale de sonotrode (8) que de l'autre surface frontale de sonotrode (8').

4. Système générateur d'ultrasons (1) selon l'une quelconque des revendications 1 à 3, **caractérisé en ce que** le convertisseur est relié à la sonotrode par l'intermédiaire d'un transformateur d'amplitude, et le transformateur d'amplitude (11) comprend un élément formant noyau de transformateur d'amplitude (12) et au moins un élément formant ailette de transformateur d'amplitude (13, 14), l'élément formant ailette de transformateur d'amplitude (13, 14) et l'élément formant noyau de transformateur d'amplitude (12) étant reliés l'un à l'autre par l'intermédiaire d'au moins deux éléments de jonction (15), l'élément formant noyau de transformateur d'amplitude (12) étant de manière préférée relié à un convertisseur (9).

5. Système générateur d'ultrasons (1) selon l'une quelconque des revendications 1 à 4, **caractérisé en ce que** les deux éléments formant ailette (3, 4) et l'élément formant noyau (2) se situent dans un plan.

6. Système générateur d'ultrasons (1) selon l'une quelconque des revendications 1 à 5, **caractérisé en ce qu'au** moins une surface frontale de sonotrode (8, 8') comprend un chanfrein, le chanfrein étant agencé au bord entre la surface frontale de sonotrode (8, 8') et la surface de scellement (7).

7. Système générateur d'ultrasons (1) selon l'une quelconque des revendications 1 à 6, **caractérisé en ce que** les éléments de jonction (5, 6) sont formés entre des ouvertures de passage ménagées dans la surface d'enveloppe, les ouvertures de passage étant de manière préférée allongées et leur direction longitudinale s'étendant de l'élément formant noyau (2) vers l'élément formant ailette (3, 4).

8. Système générateur d'ultrasons (1) selon la revendication 7, **caractérisé en ce que** les ouvertures de passage ont une largeur qui croît en direction de l'élément formant ailette (3, 4).

9. Système générateur d'ultrasons (1) selon l'une quelconque des revendications 1 à 8, **caractérisé en ce que** l'élément formant ailette (3, 4) est relié à l'élément formant noyau (2) par l'intermédiaire d'au moins 6 et d'au plus 9 éléments de jonction (5, 6).

10. Système générateur d'ultrasons (1) selon l'une quelconque des revendications 1 à 9, **caractérisé en ce que** l'élément formant ailette présente une épaisseur qui est inférieure à l'épaisseur de l'élément formant noyau, l'épaisseur de l'élément formant ailette étant de manière préférée inférieure à 75 % de l'épaisseur de l'élément formant noyau.

11. Système générateur d'ultrasons (1) selon l'une quelconque des revendications 1 à 10, **caractérisé en ce que** l'élément formant ailette présente une largeur qui est inférieure à la largeur de l'élément formant noyau, la largeur de l'élément formant ailette étant de manière préférée inférieure à 50 % et de manière particulièrement préférée inférieure à 35 % de la largeur de l'élément formant noyau.

12. Système générateur d'ultrasons selon l'une quelconque des revendications 1 à 11, **caractérisé en ce que** la surface de scellement est agencée sur la surface d'enveloppe.
